# EUROPEAN PATENT APPLICATION

(11) **EP 2 709 061 A1**
(43) Date of publication of application: **19.03.2014**
(21) Application number: 12194338.5
(22) Date of filing: 27.11.2012
(51) Int. Cl.: G06T 7/00

(54) **System and method for 3D visualization of brain iron deposition**

(30) Priority: 12.09.2012 EP 12184104
(71) Applicant: Virtual Proteins B.V., 5656 AE Eindhoven (NL); Academisch Ziekenhuis Leiden h.o.d.n. LUMC, 2333 ZA Leiden (NL)
(72) Inventor: Schooleman, Jacqueline Francisca Gerarda Maria, 5656 AE Eindhoven (NL); van der Grond, Jeroen, 2333 ZA Leiden (NL)
(74) Representative: Brants, Johan P.E.

(57) **Abstract**

The current invention concerns a method and system for visualizing patient data, and more specifically localized amyloid plaques, from the phase images of an MRI scanner.

## Description

### TECHNICAL FIELD

The invention pertains to the technical field of 3D visualization with the aid of Magnetic Resonance Imaging (MRI), in particular in-vivo 3D visualization of a subject's brain for observing, localizing and quantifying iron depositions.

### BACKGROUND

Results of a study have shown that increased cortical phase difference in Alzheimer's disease patients demonstrated on 7 Tesla T₂*-weighted magnetic resonance imaging is a potential new biomarker for Alzheimer's disease, which may reflect amyloid pathology in the early stages.

In what follows, reference is made to the following documents:
(1) Nelson PT, Braak H, Markesbery WR. Neuropathology and cognitive impairment in Alzheimer disease: a complex but coherent relationship. J. Neuropathol. Exp. Neurol. 2009 ;68:1-14.
(2) Johnson KA, Gregas M, Becker JA, Kinnecom C, Salat DH, Moran EK, Smith EE, Rosand J, Rentz DM, Klunk WE, Mathis CA, Price JC, Dekosky ST, Fischman AJ, Greenberg SM. Imaging of amyloid burden and distribution in cerebral amyloid angiopathy. Ann. Neurol. 2007 ;62:229-234.
(3) Lockhart A, Lamb JR, Osredkar T, Sue LI, Joyce JN, Ye L, Libri V, Leppert D, Beach TG. PIB is a non-specific imaging marker of amyloid-beta (Abeta) peptide-related cerebral amyloidosis. Brain 2007 ; 130:2607-2615.
(4) Ikonomovic MD, Klunk WE, Abrahamson EE, Mathis CA, Price JC, Tsopelas ND, Lopresti BJ, Ziolko S, Bi W, Paljug WR, Debnath ML, Hope CE, Isanski BA, Hamilton RL, DeKosky ST. Post-mortem correlates of in vivo PiB-PET amyloid imaging in a typical case of Alzheimer's disease. Brain 2008 ;431:1630-1645.
(5) Klunk WE, Engler H, Nordberg A, Wang Y, Blomqvist G, Holt DP, Bergström M, Savitcheva I, Huang G-F, Estrada S, Ausén B, Debnath ML, Barletta J, Price JC, Sandell J, Lopresti BJ, Wall A, Koivisto P, Antoni G, Mathis CA, Långström B. Imaging brain amyloid in Alzheimer's disease with Pittsburgh Compound-B. Annals of Neurology 2004 ;55:306-319.
(6) Engler H, Forsberg A, Almkvist 0, Blomquist G, Larsson E, Savitcheva I, Wall A, Ringhelm A, Långström B, Nordberg A. Two-year follow-up of amyloid deposition in patients with Alzheimer's disease. Brain 2006 ;129:2856-2866.
(7) Rowe CC, Ng S, Ackermann U, Gong SJ, Pike K, Savage G, Cowie TF, Dickinson KL, Maruff P, Darby D, Smith C, Woodward M, Merory J, Tochon-Danguy H, O'Keefe G, Klunk WE, Mathis CA, Price JC, Masters CL, Villemagne VL. Imaging beta-amyloid burden in aging and dementia. Neurology 2007 ;68:1718-1725.
(8) Bacskai BJ, Frosch MP, Freeman SH, Raymond SB, Augustinack JC, Johnson KA, Irizarry MC, Klunk WE, Mathis CA, Dekosky ST, Greenberg SM, Hyman BT, Growdon JH. Molecular imaging with Pittsburgh Compound B confirmed at autopsy: a case report. Arch. Neurol. 2007 ;64:431-434.
(9) Rowe CC, Villemagne VL. Brain amyloid imaging. J. Nucl. Med. 2011 ;52:1733-1740.
(10) van Rooden S, Maat-Schieman MLC, Nabuurs RJA, van der Weerd L, van Duijn S, van Duinen SG, Natté R, van Buchem MA, van der Grond J. Cerebral Amyloidosis: Postmortem Detection with Human 7.0-T MR Imaging System. Radiology 2009 ;253:788-796.
(11) Benveniste H, Einstein G, Kim KR, Hulette C, Johnson GA. Detection of neuritic plaques in Alzheimer's disease by magnetic resonance microscopy. Proceedings of the National Academy of Sciences of the United States of America 1999 ;96:14079-14084.
(12) Zhang J, Yarowsky P, Gordon MN, DI Carlo G, Munireddy S, van Zijl PCM, Mori S. Detection of amyloid plaques in mouse models of Alzheimer's disease by magnetic resonance imaging. Magn Reson Med 2004 ;51:452-457.
(13) Helpern JA, Lee S-P, Falangola MF, Dyakin VV, Bogart A, Ardekani B, Duff K, Branch C, Wisniewski T, de Leon MJ, Wolf O, O'Shea J, Nixon RA. MRI assessment of neuropathology in a transgenic mouse model of Alzheimer's disease. Magn Reson Med 2004 ;51:794-798.
(14) Lee S-P, Falangola MF, Nixon RA, Duff K, Helpern JA. Visualization of beta-amyloid plaques in a transgenic mouse model of Alzheimer's disease using MR microscopy without contrast reagents. Magn Reson Med 2004 ;52:538-544.
(15) Jack CR Jr, Garwood M, Wengenack TM, Borowski B, Curran GL, Lin I, Adriany G, Grähn OHJ, Grimm R, Poduslo JF. In vivo visualization of Alzheimer's amyloid plaques by magnetic resonance imaging in transgenic mice without a contrast agent. Magn Reson Med 2004 ;52:1263-1271.
(16) Braakman N, Matysik J, van Duinen SG, Verbeek F, Schliebs R, de Groot KIM, Alia A. Longitudinal assessment of Alzheimer's beta-amyloid plaque development in transgenic mice monitored by in vivo magnetic resonance microimaging. J Magn Reson Imaging 2006 ;24:530-536.
(17) Vanhoutte G, Dewachter I, Borghgraef P, Van Leuven F, Van der Linden A. Noninvasive in vivo MRI detection of neuritic plaques associated with iron in APP[V717I] transgenic mice, a model for Alzheimer's disease. Magn Reson Med 2005; 53:607-613.
(18) Nakada T, Matsuzawa H, Igarashi H, Fujii Y, Kwee IL. In vivo visualization of senile-plaque-like pathology in Alzheimer's disease patients by MR microscopy on a 7T system. J Neuroimaging 2008 ;18:125-129.
(19) Meadowcroft MD, Connor JR, Smith MB, Yang QX. MRI and histological analysis of beta-amyloid plaques in both human Alzheimer's disease and APP/PS1 transgenic mice. Journal of Magnetic Resonance Imaging 2009 ;29:997-1007.
(20) Falangola MF, Lee S-P, Nixon RA, Duff K, Helpern JA. Histological colocalization of iron in Abeta plaques of PS/APP transgenic mice. Neurochem. Res. 2005 ;30:201-205.
(21) Grundke-Iqbal I, Fleming J, Tung YC, Lassmann H, Iqbal K, Joshi JG. Ferritin is a component of the neuritic (senile) plaque in Alzheimer dementia. Acta Neuropathol. 1990 ;81:105-110.
(22) EI Tannir EI Tayara N, Delatour B, Le Cudennec C, Guégan M, Volk A, Dhenain M. Age-related evolution of amyloid burden, iron load, and MR relaxation times in a transgenic mouse model of Alzheimer's disease. Neurobiol. Dis. 2006 ;22:199-208.
(23) Exley C. Aluminium and iron, but neither copper nor zinc, are key to the precipitation of beta-sheets of Abeta_{42} in senile plaque cores in Alzheimer's disease. J. Alzheimers Dis. 2006 ;10:173-177.
(24) Lovell MA, Robertson JD, Teesdale WJ, Campbell JL, Markesbery WR. Copper, iron and zinc in Alzheimer's disease senile plaques. J. Neurol. Sci. 1998 ;158:47-52.
(25) Ogg RJ, Langston JW, Haacke EM, Steen RG, Taylor JS. The correlation between phase shifts in gradient-echo MR images and regional brain iron concentration. Magn Reson Imaging 1999 ;17:1141-1148.
(26) Haacke EM, Cheng NYC, House MJ, Liu Q, Neelavalli J, Ogg RJ, Khan A, Ayaz M, Kirsch W, Obenaus A. Imaging iron stores in the brain using magnetic resonance imaging. Magnetic Resonance Imaging 2005 ;23:1-25.
(27) Haacke EM, DelProposto ZS, Chaturvedi S, Sehgal V, Tenzer M, Neelavalli J, Kido D. Imaging cerebral amyloid angiopathy with susceptibility-weighted imaging. AJNR Am J Neuroradiol 2007 ;28:316-7.
(28) Yao B, Li T-Q, Gelderen P van, Shmueli K, de Zwart JA, Duyn JH. Susceptibility contrast in high field MRI of human brain as a function of tissue iron content. Neuroimage 2009 ;44:1259-1266.
(29) Duyn JH, van Gelderen P, Li T-Q, de Zwart JA, Koretsky AP, Fukunaga M. High-field MRI of brain cortical substructure based on signal phase. Proceedings of the National Academy of Sciences 2007 ;104:11796-11801.
(30) Fukunaga M, Li T-Q, van Gelderen P, de Zwart JA, Shmueli K, Yao B, Lee J, Maric D, Aronova MA, Zhang G, Leapman RD, Schenck JF, Merkle H, Duyn JH. Layer-specific variation of iron content in cerebral cortex as a source of MRI contrast. Proceedings of the National Academy of Sciences 2010 ;107:3834-3839.
(31) McKhann G, Drachman D, Folstein M, Katzman R, Price D, Stadlan EM. Clinical diagnosis of Alzheimer's disease: report of the NINCDS-ADRDA Work Group under the auspices of Department of Health and Human Services Task Force on Alzheimer's Disease. Neurology 1984 ;34:939-944.
(32) Versluis MJ, Peeters JM, van Rooden S, van der Grond J, van Buchem MA, Webb AG, van Osch MJP. Origin and reduction of motion and f0 artifacts in high resolution T2*-weighted magnetic resonance imaging: application in Alzheimer's disease patients. Neuroimage 2010 ;51:1082-1088.
(33) Schär M, Kozerke S, Fischer SE, Boesiger P. Cardiac SSFP imaging at 3 Tesla. Magnetic Resonance in Medicine 2004 ;51:799-806.
(34) Haacke EM, Xu Y, Cheng Y-CN, Reichenbach JR. Susceptibility weighted imaging (SWI). Magnetic Resonance in Medicine 2004 ;52:612-618.
(35) Duce JA, Tsatsanis A, Cater MA, James SA, Robb E, Wikhe K, Leong SL, Perez K, Johanssen T, Greenough MA, Cho H-H, Galatis D, Moir RD, Masters CL, McLean C, Tanzi RE, Cappai R, Barnham KJ, Ciccotosto GD, Rogers JT, Bush AI. Iron-export ferroxidase activity of β-amyloid precursor protein is inhibited by zinc in Alzheimer's disease. Cell 2010 ;142:857-867.
(36) Lei P, Ayton S, Finkelstein DI, Spoerri L, Ciccotosto GD, Wright DK, Wong BXW, Adlard PA, Cherny RA, Lam LQ, Roberts BR, Volitakis I, Egan GF, McLean CA, Cappai R, Duce JA, Bush AI. Tau deficiency induces parkinsonism with dementia by impairing APP-mediated iron export. Nat. Med. 2012 ;18:291-295.
(37) Smith MA, Harris PL, Sayre LM, Perry G. Iron accumulation in Alzheimer disease is a source of redox-generated free radicals. Proc. Natl. Acad. Sci. U.S.A. 1997; 94:9866-9868.
(38) Bartzokis G. Alzheimer's disease as homeostatic responses to age-related myelin breakdown. Neurobiol. Aging 2011 ;32:1341-1371.
(39) Braak H, Braak E. Neuropathological stageing of Alzheimer-related changes. Acta Neuropathol. 1991 ;82:239-259.
(40) Arnold SE, Hyman BT, Flory J, Damasio AR, Van Hoesen GW. The topographical and neuroanatomical distribution of neurofibrillary tangles and neuritic plaques in the cerebral cortex of patients with Alzheimer's disease. Cereb. Cortex 1991 ;1:103-116.
(41) Thal DR, Rib U, Orantes M, Braak H. Phases of A beta-deposition in the human brain and its relevance for the development of AD. Neurology 2002 ;58:1791-1800.
(42) Mintun MA, Larossa GN, Sheline YI, Dence CS, Lee SY, Mach RH, Klunk WE, Mathis CA, DeKosky ST, Morris IC. [11C]PIB in a nondemented population: potential antecedent marker of Alzheimer disease. Neurology 2006 ;67:446-452.
(43) Blennow K. Cerebrospinal fluid protein biomarkers for Alzheimer's disease. NeuroRx 2004 ;1:213-225.
(44) Quigley H, Colloby SJ, O'Brien H. PET imaging of brain amyloid in dementia: a review. Int J Geriatr Psychiatry 2011 ;26:991-999,
(45) Mormino EC, Kluth JT, Madison CM, Rabinovici GD, Baker SL, Miller BL, Koeppe RA, Mathis CA, Weiner MW, Jagust WI. Episodic memory loss is related to hippocampal-mediated beta-amyloid deposition in elderly subjects. Brain 2009 432:1310-1323.
(46) Rowe CC, Ellis KA, Rimajova M, Bourgeat P, Pike KE, Jones G, Fripp J, Tochon-Danguy H, Morandeau L, O'Keefe G, Price R, Raniga P, Robins P, Acosta O, Lenzo N, Szoeke C, Salvado O, Head R, Martins R, Masters CL, Ames D, Villemagne VL. Amyloid imaging results from the Australian Imaging, Biomarkers and Lifestyle (AIBL) study of aging. Neurobiol. Aging 2010 ;31:1275-1283.
(47) Villemagne VL, Pike KE, Chételat G, Ellis KA, Mulligan RS, Bourgeat P, Ackermann U, Jones G, Szoeke C, Salvado O, Martins R, O'Keefe G, Mathis CA, Klunk WE, Ames D, Masters CL, Rowe CC. Longitudinal assessment of Aβ and cognition in aging and Alzheimer disease. Ann. Neurol. 2011 ;69:181-192.
(48) Ding B, Chen K-M, Ling H-W, Sun F, Li X, Wan T, Chai W-M, Zhang H, Zhan Y, Guan Y-J. Correlation of iron in the hippocampus with MMSE in patients with Alzheimer's disease. Journal of Magnetic Resonance Imaging 2009 ;29:793-798.
(49) Zhu W, Zhong W, Wang W, Zhan C, Wang C, Qi J, Wang J, Lei T. Quantitative MR Phase-corrected Imaging to Investigate Increased Brain Iron Deposition of Patients with Alzheimer Disease1. Radiology 2009 ;253:497 -504.

Alzheimer's disease (AD) can only be diagnosed with certainty at autopsy, based on the histological detection of senile plaques containing fibrillary amyloid-β (Aβ) and neurofibrillary tangles. Currently, due to the absence of validated sensitive and specific tests, the clinical diagnosis of AD can only be made at a late stage of disease progression and with a considerable degree of uncertainty; "probable AD" at best and is based on criteria from the Diagnostic and Statistical Manual of Mental Disorders (DSM-IV) and the National Institute of Neurologic, Communicative Disorders and Stroke-AD and Related Disorders Association (NINCDS-ADRDA). Nevertheless, the histological hallmarks of AD pathology, comprising amyloid plaques and neurofibrillary tangles, are known to occur up to 10 to 20 years before the objective detection of cognitive decline (1). Recently, positron emission tomography (PET) using Pittsburgh compound-B (PiB) has been introduced as a diagnostic tool to detect cerebral amyloid in-vivo (2-8). The major disadvantages of PIB-PET are the need to use a radioactive tracer, the relative scarcity of institutions that can perform such scans due to the requirement for an on-site cyclotron, the inability to acquire anatomical and functional information in the brain during the same examination and the high prevalence of positive amyloid scans in asymptomatic individuals, especially in the elderly which hampers the use of this method as a diagnostic tool in the elderly (9).

Earlier research demonstrated the potential of high field (7T) magnetic resonance imaging (MRI) in the diagnosis of AD by showing distinct intensity changes in the cortex on T₂*-weighted images of post mortem brain specimens of AD patients (10). These features included hypo-intense foci and diffuse granular patterns of less distinct hypo-intense foci in the cerebral cortex. Similar patterns have been described in studies of AD transgenic mice and post mortem human AD, and were attributed to the presence of amyloid plaques using histological confirmation (11-19). It has been proposed that the visualization on MRI of plaques in humans and mice is based on the fact that these deposits co-localize with iron, which gives rise to magnetic susceptibility effects on T₂*-weighted images over volumes that are much larger than the actual size of amyloid plaques (17, 19-24). An alternative method to measure these susceptibility changes in the brain is to measure the relative phase in regions of interest, since it has been shown that this is a reliable indicator of the iron content in the brain (25-28). Although previous studies have demonstrated the potential of this approach in high field MRI (29,30), no diagnostic studies have been performed on AD patients in-vivo for the detection of AD pathology.

The present document discloses that a novel technique in AD, 7T T₂*-weighted MRI imaging and phase differences in the cortex and the hippocampus, harbor diagnostic information to detect AD.

The abstract and poster "7 T MRI reveals an inhomogeneous cortex and changes in gray-white matter phase in Alzheimer's Disease" presented at the Benelux ISMRM 2011 annual meeting by S. van Rooden et al. disclose a method for observing amyloid depositions in the brains of living patients. Hereto, the patients are scanned with a 7 T MRI scanner, resulting in a high-resolution transverse 2D T₂*-weighted scan of the brain. The resulting magnitude images, phase images and susceptibility-weighted images are processed and are evaluated for the presence of hypointense foci and an inhomogeneous cortex. The intensity difference between gray and white matter on phase images seemed to be increased for probable Alzheimer's disease patients. This intensity difference is quantified by measuring the phase in 16 different regions in both the grey and subcortical white matter separately in each slice. The phase values are averaged for gray and white matter per subject and the difference between gray and white matter phase is calculated. A non-parametric t-test is used to assess differences in phase values between the probable Alzheimer's disease (AD) patients' MRI images and the images taken for patients with memory complaints (MC). The abstract and poster also disclose that the phase difference between gray and white matter was larger in the AD patients (Mdn = 0.853/0.858 rad for abstract/poster) than in the MC patients (Mdn = 0.609/0.625 rad for abstract/poster), whereby the quoted values can be used in setting the appropriate threshold in step (v) of the present concept. Furthermore, the abstract discloses that the increased phase difference between gray and white matter in AD patients most likely indicates a higher amount of iron deposition in the gray matter related to cerebral amyloid-β deposition and thus can be used as a marker for Alzheimer's disease. The abstract does not disclose that the grey values of the phase images are quantitatively related to the amount of iron in a patient-independent way. Furthermore, no 3D model is made from the 2D slabs of the MRI scan. Therefore, the method presented in the abstract may only be used to observe amyloid depositions within a transverse 2D slab, and not in the longitudinal direction. Therefore, there is a need for a system and method making it possible to detect both transversely-oriented and longitudinally-oriented amyloid depositions in a patient's brain. Furthermore, there is a need for a system and method for visualizing regions of increased phase differences in 3D, which may help a subsequent diagnosing.

The article "Quantitative MR Phase-corrected Imaging to Investigate Increased Brain Iron Deposition of Patients with Alzheimer Disease" (49) by Wen-zhen Zhu et al. in Radiology (Vol. 253, No. 2, p. 497-504, 2009) discloses the use of 1.5T MR phase images in the detection of iron concentrations in different regions of the brain. By correlating the data between phase-corrected images of living and deceased adults without (indications for) Alzheimer's disease, a formula was established for the relationship between regional phase shifts and brain iron concentration. A clear correlation was observed between iron brain concentration as obtained from the regional phase shifts and the results for the relative ratio of a Mini-Mental State Examination (rrMMSE), especially in the parietal cortex (PC) subregion.

Document US 2009/252391 A1 discloses a method for assisting in the diagnosis of cerebral diseases, wherein brain images of a subject are inputted and subjected to image processing to provide the diagnosis result, thereby assisting in the diagnosis, the method comprising the steps of determining previously disease-specific regions of interest (ROIs) at the brain image using a statistical method, and statistically comparing the thus input brain images of the subject with previously prepared brain images of normal cases to provide the diagnosis result, to which the ROIs are applied. The document also discloses the possibility of using 3D modeling of the MRI-obtained slabs without going too much into detail and the possibility of using a threshold value for the grey values of the images to help diagnosing a disease. The document does not disclose the possibility of using MRI-obtained phase images for a better and patient-independent quantification of the phase difference between gray and white matter and thus the amount of iron present. The document also does not disclose details on possible 3D modeling and visualization methods.

Document US 2004/0102692 A1 is relevant as it discloses a method and system for detecting iron using MRI. More specifically, the method comprises acquiring magnetic resonance (MR) images by a selected pulse sequence to enhance brain iron deposits using a MRI system having a substantially high magnetic field strength and characterizing regions of interest within the MR images having statistically relevant quantities of brain iron deposits to indicate a given disease. In a second aspect, the document discloses a system for detecting iron in the brain using MRI which comprises a MRI device having a substantially high magnetic field strength and the device being adapted for acquiring a plurality of thin slice and T₂-weighted MR images and an image processor coupled to the imaging device and adapted for characterizing regions of interest within the MR images having iron deposits for use in at least one of diagnosis, prognosis, and prediction of progression of iron-dependent diseases. The document does not disclose the possibility of using phase images for a better and patient-independent quantification of the phase difference between gray and white matter and thus the amount of iron present. It does disclose the possibility of using 3D modeling.

Document WO 2010/051267 A1 is relevant as it discloses a method for generating a report of susceptibility of a subject to a neurodegenerative disease, the method comprising the steps of (a) performing at least one pulse sequence using a magnetic resonance imaging system to acquire a medical imaging data set from the subject with T₂ weighting, (b) reconstructing T₂ maps and R₂ maps from the medical imaging data set; (c) comparing histograms of T₂ values from the T₂ maps and R₂ maps with a basis set of histograms of T₂ values; (d) calculating an index from the comparison of step (c) that correlates the T₂ values from the T₂ maps and R₂ maps to determine the susceptibility of the subject to a neurodegenerative disease; and (e) generating a report indicating the calculated index. The method of WO 2010/051267 A1 thus offers the possibility of using MRI scans to identify the susceptibility of a subject to a neurodegenerative disease by comparing the T₂ and R₂ values of the MRI images to a database. Therefore, similarly to document US 2004/0102692 A1, the document does not disclose the possibility of using phase images for a patient-independent quantification of the phase difference between gray and white matter.

There remains a need in the art for an improved method and system for the observation of iron deposits in brain tissue with the aid of MRI, as the methods and systems disclosed in the prior art do not seem to offer quantitative images of the amount of iron in a patient-independent way, i.e. where one can compare results for different patients directly. Existing technology mostly uses amplitude images, whereby it is shown that phase images, possibly in addition to amplitude images, offer improved and more objective information on iron deposition. Further, the present state of the art does not seem to offer the possibility to make a 3D model from MRI phase images. A 3D model made from the 2D slabs of the MRI phase images may allow faster processing and easier interpretation, also by non-MRI specialists, and may allow easy observation of amyloid plaques in all directions. Even when a 3D model of quantitative data on iron deposition in a brain based on MRI phase image data is offered using state of the art technology, the data is not always precise enough to apply a filter, which allows easy observation of high concentrations of iron. The present invention aims to improve the quality of such data. Therefore, the present invention pertains a system and method using MRI scans obtained by using magnetic fields of higher than 3T, e.g. 3.1T, 4T, 5T, 6T, 7T or any value there between, more preferably about 7T.

### SUMMARY OF THE INVENTION

The present invention provides a method and system for visualizing patient data, and more specifically localized amyloid plaques, from the phase images of an MRI scanner.

The method may comprise the following steps:
(1) Preferably providing magnitude and/or phase images of 2D slabs, preferably of a patient's brain, preferably coming from an MRI set-up using magnetic fields of higher than 3T, preferably higher than 5T, more preferably about 7T.
(2) Preferably preprocessing, e.g. enhancing, said images, preferably by correcting the magnitude images for inhomogeneities and/or unwrapping the phase images. The two pre-processed sets of images may be combined and further processed in order to better identify the regions of interest in the brain, e.g. the cortex and/or hippocampus.
(3) Quantitatively relating the phase images which comprise grey values to the amount of a substance in the patient's brain preferably on an absolute scale, i.e. preferably without the necessity of performing a patient-dependent gauging of the grey values, for making an absolute and quantitative comparison of images possible or at least more easily obtainable.
(4) building a quantitative 3D model of the patient's brain, preferably by further processing the set of 2D slabs of phase images, whose grey values are quantitatively related to the amount of a substance in the patient's brain.
(5) Preferably applying a filter to said 3D model which shows the regions with a high concentration of a substance such as iron, this being an indicator of the presence of amyloid, whereby this filter preferably comprises setting a threshold for the grey-value of the 3D model, preferably averaged over a certain pre-determined volume. Preferably a user may have control over settings of said filter, or the settings may have been implemented on the basis of pre-existing information.
(6) Preferably output of said filter is a quantitative 3D dataset of decreased/increased and/or alarmingly low/high amyloid depositions in the patient's brain which can be reliably compared to other datasets of the same patient's brain or of other patients' brains.
(7) Visualizing the amyloid depositions using 3D visualization software.
(8) Preferably using the resulting visualization and quantitative 3D dataset for the purpose of obtaining improved information about a patient's brain, e.g. for improving knowledge about diseases such as Alzheimer's, which lead to amyloid plaques in a patient's brain.

The system comprises:
- an MRI set-up, preferably a scanning set-up, preferably comprising a magnetic field generator of magnetic fields of higher than 3T, e.g. 3.1T, 4T, 5T, 6T, 7T or any value there between, more preferably about 7T, which is capable of and/or arranged for obtaining magnitude and phase images of 2D slabs, preferably of a patient's brain;
- preferably an image-preprocessing system connected to said MRI set-up, said image-processing system capable of and/or arranged for receiving said magnitude and phase images, and capable of and/or arranged for performing the steps of preprocessing, e.g. enhancing, said images, preferably by correcting the magnitude images for inhomogeneities and/or unwrapping the phase images.
- an image-processing system capable of and/or arranged for receiving said images, preferably from said MRI set-up and/or said image-preprocessing system, said image-processing system capable of and/or arranged for performing the steps of:
   (i) Preferably combining and/or further processing the two, preferably pre-processed, sets of images in order to better identify the regions of interest in the brain, e.g. the cortex and/or hippocampus;
   (ii) quantitatively relating the phase images which comprise grey values to the amount of a substance in the patient's brain preferably on an absolute scale, i.e. preferably without the necessity of performing a patient-dependent gauging of the grey values, for making an absolute and quantitative comparison of images possible or at least more easily obtainable;
   (iii) building a quantitative 3D model of the patient's brain, preferably by further processing the set of 2D slabs of phase images, whose grey values are quantitatively related to the amount of a substance in the patient's brain;
   (iv) preferably applying a filter to said 3D model which shows the regions with a high concentration of a substance such as iron, this being an indicator of the presence of amyloid, whereby this filter preferably comprises setting a threshold for the grey-value of the 3D model, preferably averaged over a certain pre-determined volume. Preferably a user may have control over settings of said filter, or the settings may have been implemented on the basis of pre-existing information; preferably output of said filter is a quantitative 3D dataset of decreased/increased and/or alarmingly low/high amyloid depositions in the patient's brain which can be reliably compared to other datasets of the same patient's brain or of other patients' brains;
   (v) visualizing the amyloid depositions using 3D visualization software.

By the term "slabs" as used herein, is meant substantially planar slices or substantially planar parts of an object, whereby the object may or may not be kept intact. E.g. when an MRI image is taken of a slab of a brain, this may be ex-vivo, whereby a slice may be cut from the brain, or it may be in-vivo, whereby the slab refers to a substantially planar part within the brain.

In a further aspect, the present invention pertains a method for developing a treatment to, preferably neurodegenerative, diseases which lead to amyloid plaques in a patient's brain such as Alzheimer's disease, using a method and/or a system as disclosed in this document.

The method and system of the present invention can be used:
- in in-vivo observation of iron concentrations for diagnostic support for neurodegenerative diseases such as Alzheimer's disease and for performing general research on the brain;
- concept during development of treatments and/or pharmacological products against neurodegenerative diseases. The present method can be applied in-vivo to patients undergoing new treatments, whereby their progress can be monitored over time.

### DESCRIPTION OF FIGURES

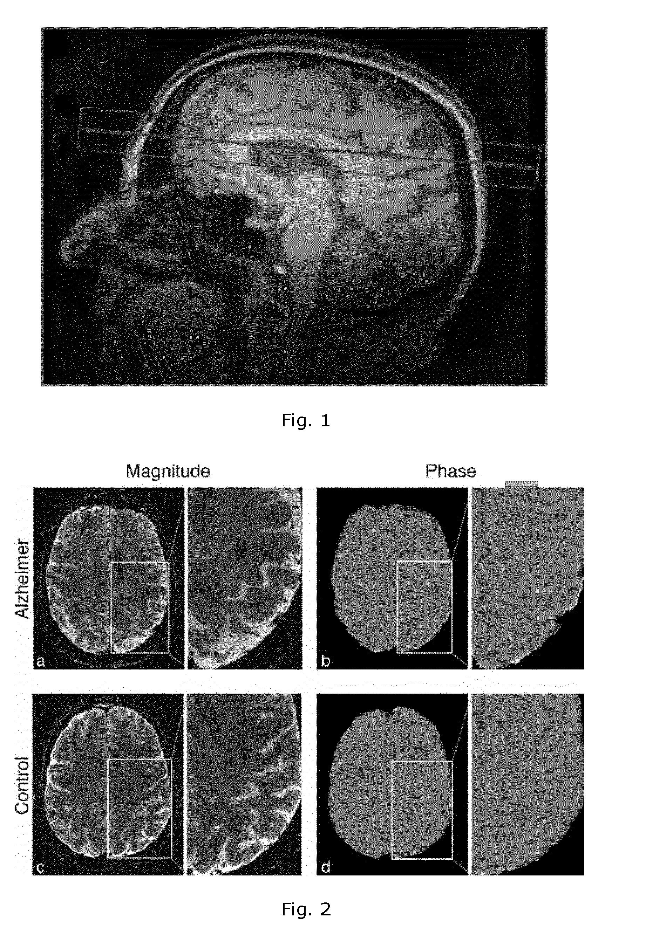

**Figure 1** shows a sagittal survey image in a sagittal plane, whereby the stack position of the 2D T₂*-weighted gradient-echo scan including the frontal and parietal regions for amyloid detection is shown.
**Figure 2** shows cortex weighted images obtained in AD patient and control subject, whereby representative 0.24 x 0.24 mm² 2D T₂*-weighted gradient echo images show an AD patient (A and B) and a control subject (C and D). Image A and C show magnitude images and images B and D phase images of the parietal region. No hypointense foci are seen on the magnitude images. The phase images show that the contrast between gray and white matter is enhanced in the AD patient in comparison to the control subject, indicating a larger cortical phase difference. The images show transverse planes.

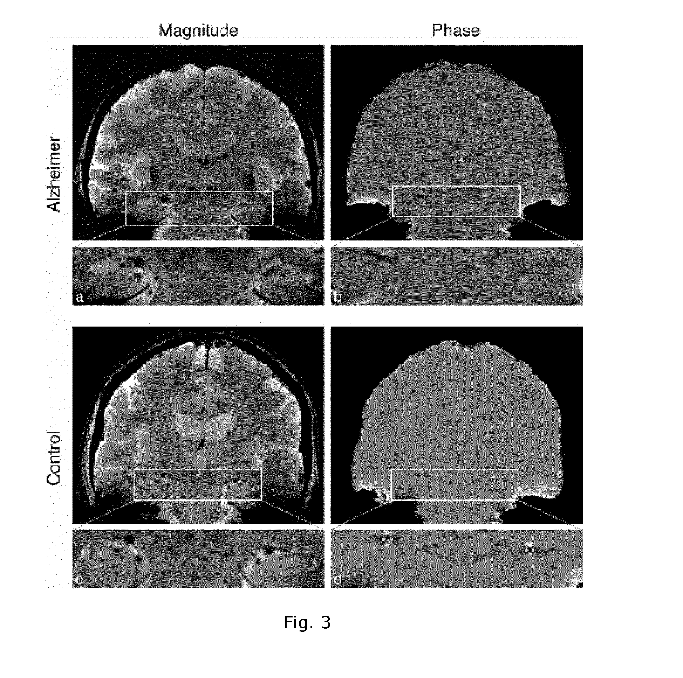

**Figure 3** shows hippocampus T₂-weighted images obtained in AD patient and control subject, whereby representative 0.5 x 0.5 mm² 2D T₂*-weighted gradient echo images show an AD patient (A and B) and a control subject (C and D). Image A and C show magnitude images and image B and D phase images of the hippocampal region. No hypointense foci are seen on the magnitude images. The phase images show no difference between the AD patient and the control subject in terms of image contrast between hippocampus and white matter.

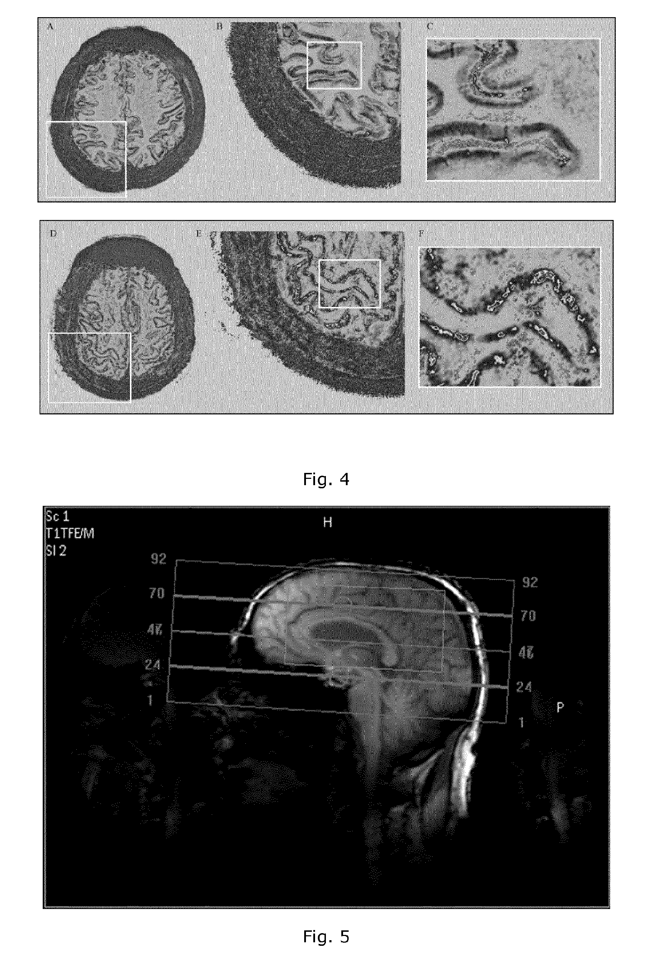

**Figure 4** shows an image of the cortex using a filter as disclosed in the present invention on phase images of a control subject (a) and close-up images of the same image (b, c). Image of the cortex of an 80 year old AD patient using a filter as disclosed in the present invention on phase images (d) and close-up images of the same image (e, f). In this image red marks the highest phase value, and therefore the highest iron content. Light blue marks the lowest phase value, indicating low iron content.
**Figure 5** shows a sagittal survey image in a sagittal plane, whereby the stack position of the 2D T2*-weighted gradient-echo scan including the frontal and parietal regions for amyloid detection is shown. The green box represents the area of B0 shimming.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

The present invention concerns a method and system for visualizing patient data as claimed in claims 1 and 2 respectively. Such a method and system have a number of benefits compared with prior art methods or systems:
- The phase images obtained by the MRI are quantitatively related to the amount of e.g. iron in a patient-independent way, i.e. one can compare results for different patients directly. Existing technology mostly uses amplitude images, whose grey values are not quantitatively related to the amount of iron.
- A 3D model is made from the 2D slabs of the MRI scan. This allows faster processing and easier interpretation, also by non-MRI specialists. Further, this allows easy observation of amyloid plaques in all directions.
- A digital filter may applied, which allows easy observation of high concentrations of e.g. iron. Such a filter can be adjusted to the needs of the user in a versatile manner.

In a preferred embodiment, the system comprises an image generating system for allowing an observer to manipulate a virtual object, comprising image pickup means for capturing an image of a physical work space, virtual space image generating means for generating an image of a virtual space comprising the virtual object, composite image generating means for generating a composite image by synthesising the image of the virtual space generated by the virtual space image generating means and the image of the physical work space outputted by the image pickup means, display means for displaying the composite image generated by the composite image generating means, a manipulator for manipulating the virtual object by the observer, and manipulator pose determining means for determining the pose of the manipulator in the physical work space, characterised in that the system is configured to transform a change in the pose of the manipulator in the physical work space as determined by the manipulator pose determining means into a change in the pose and/or status of the virtual object in the virtual space. Preferably:
- the pose of the manipulator in the physical work space is wholly or partly determined from the image of the physical work space outputted by the image pickup means;
- the manipulator comprises a recognition member and wherein the recognition member is recognised in the image of the physical work space by an image recognition algorithm, and wherein the appearance of the recognition member in the image of the physical work space is a function of the pose of the recognition member relative to the image pickup means;
- the pose of the manipulator in the physical work space is at least partly determined by measuring acceleration exerted on the manipulator by gravitational forces and/or by observer- generated movement of the manipulator;
- the manipulator comprises an accelerometer;
- the manipulator is connected to an n-degrees of freedom articulated device;
- a change in the pose of the manipulator in the physical work space causes a qualitatively, and preferably also quantitatively, identical change in the pose of the virtual object in the virtual space;
- a virtual cursor is generated in the image of the virtual space, such that the virtual cursor becomes superposed onto the image of the manipulator in the physical work space outputted by the image pickup means;
- the system is mountable on a standard working area such as a desktop;
- the image pickup means is configured to capture the image of the physical work space substantially at an eye position and in the direction of the sight of the observer and the virtual space image generating means is configured to generate the image of the virtual space substantially at the eye position and in the direction of the sight of the observer;
- the image pickup means is configured such that during a session of operating the system the location and extent of the physical work space does not substantially change;
- the display means is configured such that during a session of operating the system the position and orientation of the display means does not substantially change;
- the image generating system is configured to provide a stereoscopic view of the physical work space and/or the virtual space, preferably both;
- the system is adapted for network applications to accommodate more than one observer; and/or
- the physical work space captured by the image pickup means is remote from the observer;

In a preferred embodiment, the method comprises performing an image generating method for allowing an observer to manipulate a virtual object, configured to be carried out using the image generating system as defined in this document, the method comprising the steps of obtaining an image of a physical work space, generating an image of a virtual space comprising the virtual object, generating a composite image by synthesising the image of the virtual space and the image of the physical work space, and determining the pose of a manipulator in the physical work space, characterised in that a change in the pose of the manipulator in the physical work space is transformed into a change in the pose and/or status of the virtual object in the virtual space.

The present concept is new with respect to previous 3D visualization techniques of MRI images, as it uses predominantly phase images. Furthermore, the present invention uses the phase images for a quantitative and patient-independent indication of iron concentration in the brain.

The present concept is also new with respect to previous use of phase images in the detection of iron concentrations in the brain, as it uses a 3D model, 3D visualization and a filtering algorithm. This allows easy, fast and accurate observation of amyloid plaques lying in all directions in the brain.

The use of a high-field, preferably about 7-Tesla, MRI scanner seems new in this field, and gives rise to better images and more accurate results.

The invention is further described by the following non-limiting examples which further illustrate the invention, and are not intended to, nor should they be interpreted to, limit the scope of the invention.

### EXAMPLES

The first example presents results of an investigation about whether on high field 7 Tesla T₂*-weighted magnetic resonance imaging phase differences between different tissues in the cortex as well as in the hippocampus of a subject's brain can be detected that harbor diagnostic information for Alzheimer's disease. In all cases, informed consent was obtained to perform magnetic resonance imaging. We performed T₂*-weighted magnetic resonance imaging in 15 patients with mild to moderate Alzheimer's disease and 16 control subjects. All magnetic resonance imaging scans were visually assessed and phase images were used to quantify cortical and hippocampal inter-tissue phase differences. Non-parametric t-tests, logistic regression analysis, receiver operating characteristic analysis, and linear regression analysis including a Pearson correlation were all used to assess differences between Alzheimer's disease patients and control subjects. Alzheimer's disease patients demonstrated an increased cortical phase difference (p<0.001) compared to control subjects, resulting in the parietal cortex in a sensitivity of 69% and a corresponding specificity of 93%. These phase differences were associated with the individual Mini Mental State Examination (r = -0.54, p<0.05). In contrast, hippocampal phase differences were not significantly increased in Alzheimer's disease patients and were not associated with the Mini Mental State Examination. Increased cortical phase difference in Alzheimer's disease patients demonstrated on 7 Tesla T₂*-weighted magnetic resonance imaging is a potential new biomarker for Alzheimer's disease, which may reflect amyloid pathology in the early stages.

### MATERIALS AND METHODS

### Participants

This study was approved by the local institutional review board. In all cases, informed consent was obtained. In total 16 AD patients with a mean age of 76.9 years (range 68 to 86 years, 10 male/6 female) and 15 control subjects with a mean age of 75.1 years (range 69 to 80 years, 10 male/5 female) were included.

The AD patients were recruited from the memory clinic of the Leiden University Medical Center. Memory clinic patients were referred to the hospital by their general practitioner or a medical specialist. Prior to the 71 study these patients all underwent a routine clinical protocol, comprising a whole brain MRI (3 Tesla), a battery of neuropsychological tests, and a general medical and neurological examination performed by a neurologist, psychiatrist or internist-geriatrician. The diagnosis was made in a multidisciplinary consensus meeting using the NINCDS-ADRDA criteria for diagnosing probable Alzheimer's disease (31). Participants with the diagnosis 'probable AD', who were capable of giving informed consent (Mini Mental State Examination (MMSE) 19) with late onset dementia (age > 67 year) were selected for inclusion in the 7T study either retrospectively within one year after attending the memory clinic, or prospectively.

Healthy control subjects were recruited by focussed advertisement. Subjects with an age between 69-80 years, who were living independently, had an MMSE 25 and a Geriatric Depression Scale (GDS) 4 were selected for inclusion. Subjects with the following diseases were excluded; stroke, morbus Parkinson, dementia, diabetes mellitus, rheumatoid arthritis, polymyalgia, rheumatica, cancer, heart failure, and chronic obstructive pulmonary disease.

### Image acquisition

MRI was performed on a whole body human 71 MR system (Philips Healthcare, Best, the Netherlands) using a quadrature transmit and 16-channel receive head coil (Nova Medical, Wilmington, MA, USA). Participants were scanned using a 2D flow-compensated transverse T₂*-weighted gradient-echo scan which included the frontal and parietal regions for amyloid detection with a total imaging duration of 10 minutes. Imaging parameters were: repetition time (TR)/echo time (TE) 794/25 ms, flip angle 45°, slice thickness 1.0 mm with a 0.1 mm interslice gap, 20 slices, 240 x 180 x 22 mm field ofview, 1000 x 1024 matrix size - resulting in an in-plane nominal spatial resolution of 0.24 x 0.24 mm 2. Figure 1 shows a typical positioning of these 20 slices. The bandwidth per pixel was 46 Hz, corresponding to a readout length of approximately 22 ms. The frequency and phase encoding directions were along the anterior-posterior and right-left axes, respectively. Additionally, a coronal 2D flow-compensated T₂*-weighted gradient echo scan covering the hippocampus with a total imaging duration of 6 minutes was performed. Imaging parameters were: TR/TE 624/14 ms, flip angle of 40°, slice thickness of 3.0 mm with no interslice gap, 32 slices, 240 x 180 x 96 mm field of view, 480 x 480 matrix size - resulting in a nominal in-plane spatial resolution of 0.5 x 0.5 mm 2. These sequences are very sensitive to image artifacts arising from resonance frequency fluctuations within the brain caused by slight patient movements, even in areas significantly away from the head. A navigator echo was included to correct for these artifacts (32). Shimming up to third order was performed using an image based shimming approach (33). The phase images were subsequently unwrapped by highpass filtering with a 92x92 kernel size (34).

### Image analysis

First, the T₂*-weighted gradient-echo images were evaluated, blinded for diagnosis, for hypo-intense foci by SvR and checked by MvB as described in a previous ex-vivo study (10).

Image phase values in the cortex were determined using the transverse 2D T₂*-weighted gradient echo scans. Based on the visual observation of more contrast between gray and white matter in the AD patients than in controls due to a higher signal intensity within the gray matter, the phase values of the cortical gray matter (GM) were determined in regions of interests (ROIs) in four different areas of the brain: temporoparietal left, temporoparietal right, frontal and parietal. Because of the laminar variation in the cortical areas (29), histograms perpendicular to the cortex within these regions were created to measure peak gray matter phase values, over at least 10 cortical regions per slice and per region. To correct for local macroscopic magnetic field inhomogeneities subcortical white matter phase values were used as an internal reference value. Phase values for gray and white matter were measured in these four areas per MRI slice for every other slice (ten in total), resulting in 40 phase values for gray and white matter separately per subject. Phase values of the different ROIs of the four regions were averaged. Per subject, the overall phase difference between cortical gray and subcortical white matter (cortical phase difference) was calculated for each region and expressed in radians.

Phase values of the hippocampus were determined using the coronal 2D T₂*-weighted gradient echo scans. The hippocampus was manually segmented and phase values were determined on 5 consecutive slices, starting at the head of the hippocampus, for the right and left hippocampus separately. For each subject, these five measurements were averaged for each hippocampus.

Phase values of the white matter were determined in three neighboring areas of subcortical white matter on each of the five slices and averaged per subject. The phase difference of the hippocampus was calculated by the difference in phase value of the hippocampus and white matter (hippocampal phase difference) and expressed in radians. Analysis of the hippocampus was only performed in 12 of the 16 AD patients and in 14 of the 15 controls, because of severe motion artifacts that could not be completely corrected for (three subjects) or because participants were not able to finish the whole scan protocol (two subjects).

### Statistics

A Mann-Whitney U-test was used to assess differences in age, gender, MMSE and phase measurements between AD and control groups. Logistic regression analysis was used to assess the association between diagnosis and intertissue phase differences in the cortex and hippocampus, corrected for age and gender. To assess the interaction between cortical gray matter/hippocampal and white matter phase values, both were also entered as covariates in one model. Receiver operating characteristic (ROC) analysis was performed to determine the area under the ROC curve and to assess the optimal cut-off phase difference in the cortex and hippocampus to detect AD with its corresponding sensitivity, specificity, positive predictive value, and negative predictive value. To determine the association between MMSE and phase difference in the cortex and hippocampus, a linear regression analysis including a Pearson correlation corrected for age and gender was performed. All statistical analyses were performed with the Statistical Package of Social Sciences (SPSS, version 17.0.1; SPSS, Chicago, Ill).

### RESULTS

The characteristics of the participants are shown in Table 1. No difference in age or gender was found between patient and control groups. Scores for global cognitive functioning (MMSE score) were significantly higher in controls (29.0 points) than in patients with AD (22.5 points), p<0.001.

| **Table 1: characteristics of AD patients and control subject.** | | |
|---|---|---|
| | AD(n=16) | Controls (n = 15) |
| Mean age, years (range) | 76.9 (68-86) | 75.1 (69-80) |
| Male/female | 10/6 | 10/5 |
| Median MMSE, points (range) | 22.5 (19-26) | 29.0 (27-30) |

| | | |
|---|---|---|
| AD = Alzheimer's Disease, MMSE = Mini Mental State Examination. | | |

Figure 2 shows representative transverse T₂*-weighted magnitude and phase images of the parietal region of a subject with AD (a and b) and a control T₂*-subject (c and d). Figure 3 shows coronal T₂*-weighted magnitude and phase images of the hippocampus of a subject with AD (a and b) and a control subject (c and d). In none of the subjects were small focal hypointensities found in either the cortex or hippocampus.

| **Table 2: Mean phase differences and SDs of the cortical and hippocampal subregions in AD patients and control subjects.** | | | |
|---|---|---|---|
| | AD (rad) (n = 16) | Control (rad) (n = 15) | p-value |
| Temporoparietal left | 0.90 ±0.08 | 0.79+0.08 | 0.001 |
| Temporoparietal right | 0.97+0.10 | 0.85+0.09 | 0.001 |
| Frontal | 0.70 ±0.08 | 0.62 ±0.07 | 0.004 |
| Parietal | 0.87 ±0.10 | 0.74 ±0.08 | 0.000 |
| Hippocampus right | 0.09 ±0.04 | 0.07 ±0.03 | 0.18 |
| Hippocampus left | 0.10 ±0.04 | 0.08±0.02 | 0.14 |

| | | | |
|---|---|---|---|
| AD = Alzheimer's Disease, rad = radians. | | | |

Table 2 shows the mean phase differences of the temporoparietal, frontal, parietal cortex and the right and left hippocampus. For the temporoparietal, frontal, and parietal regions, a larger cortical phase difference (p <0.005) was found in the AD patients compared to control subjects (adjusted for age and gender). For both hippocampi no difference in phase differences between groups was observed. Analysis in which both gray and white matter values were entered in the logistic regression model showed that only the cortical gray matter phase shift, and not the white matter phase shift, was associated with diagnosis. For the hippocampus, both gray and white matter phase shifts were not associated with diagnosis.

To determine the diagnostic value of the phase measurements in differentiating AD from control subjects, ROC analysis was performed for each region. Table 3 shows the area under the curve (AUC), cut-off value, sensitivity, specificity, positive and negative predictive values of all regions selected. For the temporoparietal, frontal, and parietal regions an AUC between 0.79 and 0.85 was found, with the regions all having a high specificity (90-100%) and a moderate-to-high sensitivity (50-70%). Of these regions, the parietal region demonstrated the highest AUC (0.85) with a sensitivity of 69% and a specificity of 93%. The corresponding positive predictive value and negative predictive value were 92% and 74%. Both hippocampi demonstrated a lower AUC; right hippocampus 0.66 and left hippocampus 0.67. This resulted in a relatively lower specificity and positive predictive value. The sensitivity and negative predictive values were comparable with the regions in the cortex.

There was a significant negative correlation (adjusted for age and gender) between MMSE and phase differences in the temporoparietal left region, r =-0.47 (β = -0.464, p<.05), temporoparietal right region, r = -0.41 (β = -0.473, p<.05), frontal region, r = -0.44 (β = -0.404, p<.05) and parietal region, r =-0.54 (β = - 0.501, p<.05) (all: P < 0.05). For the right and the left hippocampus there was no correlation between MMSE and phase difference (right hippocampus, r = -0.25, p = 0.21 (β = -0.168, p = .404), left hippocampus, r = -0.27, p = 0.19 (β = -0.190, p = .336)).

### DISCUSSION

This study shows that using a novel high-field imaging technique at 7T, AD patients have an increased cortical phase difference demonstrated on T₂*-weighted MRI. This phase difference enables the differentiation between AD patients and controls with a high specificity, independent of age and gender. Moreover, these phase differences were related to the individual MMSE score. Of all regions studied, the parietal region shows the highest specificity combined with sensitivity and the highest correlation with MMSE. On the other hand, phase differences in the hippocampus were not significantly increased in AD patients and were not associated with MMSE.

These cortical phase differences indicate a higher amount of iron in the cortex of AD patients. AD pathology, both amyloid deposition and neurofibrillary tangles as well as tau deficiency is shown to be related to neuronal iron accumulation in AD (35-37). Moreover, iron accumulation in the brain is also associated with demyelination which is also suggested to be an early phenomenon in AD (38). However, the particular distribution of the phase changes in the brain follows the known cerebral distribution of amyloid deposition in AD. Our data show that the neocortical brain regions (and more specifically the parietal region), as compared to the hippocampal regions, show a much higher area under the curve in the ROC analysis in differentiating AD patients from control subjects based on phase difference. Pathology studies have shown that the neocortex is the first structure in the brain that is affected by amyloid depositions whereas the hippocampus is not only more mildly affected by amyloid plaques but also affected at a later stage of AD than the neocortex (39-41). This sequence of events has been confirmed by PiB-PET studies, showing high amyloid loads in the parietal and frontal regions and not in hippocampal regions (5-7, 42).

When comparing our data with other methods that reflect amyloid pathology, an early marker for AD, such as cerebrospinal fluid (CSF) assay of the amyloid peptide or Aβ imaging, which are currently the best validated methods (9), our method shows very high specificity. Previous studies indicated that AD patients have reduced levels of Aβ42 in CSF compared to control subjects. 7T MRI had slightly lower sensitivity than these CSF analyses (69% vs. 86%) but had a higher specificity (93-100% vs. 89%) (43). PET studies using [¹¹C] PiB have shown the possibility of detecting AD pathology, although the diagnostic utility is limited (44) and numbers on sensitivity and specificity are sparse. Mormino and coworkers (45) showed high sensitivity (90%) and specificity (90%) in differentiating AD patients from controls. However, within the group of healthy subjects the specificity drops with increasing age, because the percentage of positive PiB-PET scans increases rapidly with 12% of the people in their 60s, 30% in their 70s and 50% in their 80s giving "false positive" results (42, 46, 47). Moreover, both PET scans and CSF assays of the amyloid peptide put an extra burden on memory clinic patients since these are not part of the normal clinical diagnostic routine and are quite invasive. Our data show that measuring phase differences using T₂*-weighted MRI might improve the specificity of AD diagnosis and open up the possibility to a novel clinical tool to detect AD without having to put significant extra burden on memory clinic patients. Although 7T is currently not regarded as a routine examination, our findings may be able to be translated to lower, more common, field strengths, although the sensitivity and specificity are likely to be lower due to the lower absolute values of the inter-tissue phase differences at lower fields. This hypothesis is supported by the results of two earlier studies indicating that severity of cognitive impairment in AD patients was associated with phase differences indicating iron accumulation, in the hippocampus, globus pallidus and putamen (48) and hippocampus, parietal cortex, putamen, caudate nucleus and dentate nucleus (49), demonstrated at 1.5T.

Our present study could not replicate the ex-vivo finding of hypo-intense foci, that might represent amyloid plaques (10). Although we corrected for resonance frequency variations, which are the main contributor to decreased image quality in AD patients, with a navigator echo (32) it is highly likely that even sub-voxel degrees of motion blur the hypo-intense foci.

| Table 3: differentiating between AD patiens and control subject for the different regions | | | | | | |
|---|---|---|---|---|---|---|
| | AUC | cut-off value (rad) | Sensitivity(%) | Specificity(%) | PPV+ (%) | NPV-(%) |
| Temporoparietal left | 0.842 | 0.922 | 56 (9/16) | 100(15/15) | 100 (9/9) | 68(15/22) |
| Temporoparietal right | 0.823 | 0.985 | 50 (8/16) | 100(15/15) | 100(8/8) | 65(15/23) |
| Frontal | 0.794 | 0.69 | 56 (9/16) | 93(14/15) | 90 (9/10) | 67(14/21) |
| Parietal | 0.854 | 0.817 | 69(11/16) | 93(14/15) | 92(11/12) | 74(14/19) |
| Hippocampus right | 0.655 | 0.074 | 75 (9/12) | 71(10/14) | 69 (9/13) | 77(10/13) |
| Hippocampus left | 0.673 | 0.095 | 58 (7/12) | 86(12/14) | 78(7/9) | 71(12/17) |

| | | | | | | |
|---|---|---|---|---|---|---|
| AUC = area under the curve, PPV+ = positive predictive value, NPV- = negative predictive value. | | | | | | |

A limitation of the present study is that phase measurements might also be influenced by the geometry and orientation of the scans (28). We limited these effects as much as possible by carefully positioning every participant in the same manner. Moreover, phase values were measured in the exact same way by using a standard method. Furthermore, we averaged multiple measures of phase values to cancel out the possible effects of geometry and orientation. A second limitation is that white matter phase values, which were used to correct for magnetic field inhomogeneities, might have an influence on the results. However, our data show that the observed phase changes were mainly caused by phase shifts in the gray matter only. A third limitation is that we only included AD patients and healthy controls and therefore the diagnostic accuracy of our method in a group of memory clinic patients is unclear. The specificity of the presented method should be examined thoroughly by assessing different categories of neurodegenerative diseases to evaluate the ability to differentiate between different forms of dementia. Moreover, the value of our method should be investigated in the preclinical stages of AD in future studies to evaluate the possibility of detecting early AD pathology and to be used as an early treatment marker.

This first example study showed a novel technique using 7T MRI that shows that cortical phase difference is increased in AD patients compared to controls, which most likely indicates a higher amount of iron deposition in the gray matter related to AD pathology. Since cerebral Aβ deposits are known to occur in the early stages of AD, these preliminary data are promising and might open up the possibility to use phase differences as a potential new biomarker for AD, and therefore facilitate an earlier diagnosis of AD and open up the possibility for much earlier administration of anti-amyloid therapies.

Figure 4 shows an image of the cortex using a filter as disclosed in the present invention on phase images of a control subject (a) and close-up images of the same image (b, c). Image of the cortex of an 80 year old AD patient using a filter as disclosed in the present invention on phase images (d) and close-up images of the same image (e, f). In this image red marks the highest phase value, and therefore the highest iron content. Light blue marks the lowest phase value, indicating low iron content. The phase images may be obtained by the system and method as presented in this document, e.g. as presented in the herein disclosed example study.

A second example study which is illustrative of the present invention is given here below, with reference to fig. 5.

This second example presents another way of image acquisition to obtain a whole brain scan. MRI was performed on a whole-body human 7 Tesla MR system (Philips Healthcare, Best, the Netherlands) a using a quadrature transmit and 16-channel receive head coil (Nova Medica, Wilmington, MA, USA). Participants were scanned using a 2D flow-compensated transverse T2*-weighted gradient-echo scan which included the frontal and parietal regions for amyloid detection with a total imaging duration of 20 minutes and 23 seconds. Imaging parameters were: repetition time (TR)/echo time (TE) 1763/25 ms, flip angle 60°, slice thickness 1.0 mm with a 0.1 mm interslice gap, 46 slices, 240 x 180 x 50 mm field of view, 1000 x 746 matrix size with a 2.2 SENSE factor - resulting in an in-plane nominal spatial resolution of 0.24 x 0.24 mm. Figure 5 shows a typical positioning of these 50 slices. The bandwidth per pixel was 46 Hz, corresponding to a readout length of approximately 22 ms. The frequency and phase encoding directions were along the anterior-posterior and right-left axes, respectively. This sequence is very sensitive to image artifacts arising from resonance frequency fluctuations within the brain caused by slight patient movements, even movement of areas significantly away from the head. A navigator echo was included to correct for these artifacts (32). Shimming up to third order was performed using an image based shimming approach (33). The phase images were subsequently unwrapped by highpass filtering with a 92x92 kernel size (34).

Additionally, a whole-head 3D sagittal SPAIR fat suppressed T2-weighted turbo spin echo scan with a total imaging duration of 7 minutes and 39 seconds was performed. Imaging parameters were: repetition time (TR)/echo time (TE) 3000/295 ms, flip angle 100°, slice thickness 0.7 mm with no interslice gap, 272 slices, 250 x 250 x 190 mm field of view, 356 x 357 matrix size with a 2 x 2.8 SENSE factor - resulting in an in-plane nominal spatial resolution of 0.7 x 0.7 mm. The frequency encoding direction was along the feet-head axis; phase encoding directions were along the anterior-posterior and right-left axes.

It is supposed that the present invention is not restricted to any form of realization described previously and that some modifications can be added to the presented example of fabrication without reappraisal of the appended claims. For example, the present invention has been described referring to Alzheimer's disease, but it is clear that the invention can be applied to other diseases for instance, such as Parkinson's.

## Claims

1. Method for visualizing patient data comprising the steps of:
- providing magnitude and/or phase images of 2D slabs of a patient's brain, coming from an MRI set-up using magnetic fields of higher than 3T;
- enhancing said images by correcting the magnitude images for inhomogeneities and/or unwrapping the phase images;
- combining and further processing the said enhanced sets of images in order to better identify the regions of interest in the brain;
- quantitatively relating the phase images which comprise grey values to the amount of a substance in the patient's brain on an absolute scale for making an absolute and quantitative comparison of images possible or at least more easily obtainable;
- building a quantitative 3D model of the patient's brain, by further processing the set of 2D slabs of phase images, whose grey values are quantitatively related to the amount of a substance in the patient's brain;
- applying a filter to said 3D model which shows the regions with a high concentration of iron, this being an indicator of the presence of amyloid, whereby this filter comprises setting a threshold for the grey-value of the 3D model, averaged over a certain pre-determined volume, whereby a user has control over settings of said filter or the settings may have been implemented on the basis of pre-existing information, whereby output of said filter comprises a quantitative 3D dataset of decreased or increased and/or alarmingly low or high amyloid depositions in the patient's brain which can be reliably compared to other datasets of the same patient's brain or of other patients' brains;
- visualizing the amyloid depositions using 3D visualization software;
- using the resulting visualization and quantitative 3D dataset for the purpose of obtaining improved knowledge about diseases which lead to amyloid plaques in a patient's brain.

2. System for visualizing patient data comprising:
- a scanning MRI set-up, comprising a magnetic field generator of magnetic fields of higher than 3T, which is arranged for obtaining magnitude and phase images of 2D slabs of a patient's brain;
- an image-preprocessing system connected to said MRI set-up, said image-processing system arranged for receiving said magnitude and phase images, and arranged for performing the steps of enhancing said images by correcting the magnitude images for inhomogeneities and/or unwrapping the phase images;
- an image-processing system arranged for receiving said magnitude and phase images from said MRI set-up and/or said image-preprocessing system, said image-processing system arranged for performing the steps of:
(i) combining and further processing the said enhanced sets of images in order to better identify the regions of interest in the brain;
(ii) quantitatively relating the phase images which comprise grey values to the amount of a substance in the patient's brain on an absolute scale for making an absolute and quantitative comparison of images possible or at least more easily obtainable;
(iii) building a quantitative 3D model of the patient's brain, by further processing the set of 2D slabs of phase images, whose grey values are quantitatively related to the amount of a substance in the patient's brain;
(iv) applying a filter to said 3D model which shows the regions with a high concentration of iron, this being an indicator of the presence of amyloid, whereby this filter comprises setting a threshold for the grey-value of the 3D model, averaged over a certain pre-determined volume, whereby a user has control over settings of said filter or the settings may have been implemented on the basis of pre-existing information, whereby output of said filter comprises a quantitative 3D dataset of decreased or increased and/or alarmingly low or high amyloid depositions in the patient's brain which can be reliably compared to other datasets of the same patient's brain or of other patients' brains;
(v) visualizing the amyloid depositions using 3D visualization software.

3. Method for developing a treatment to neurodegenerative diseases which lead to amyloid plaques in a patient's brain such as Alzheimer's disease, using a method according to claim 1 and/or a system according to claim 2.
